# EUROPEAN PATENT SPECIFICATION

(11) **EP 3 415 686 B1**
(45) Date of publication and mention of the grant of the patent: **05.08.2020**
(21) Application number: 18176547.0
(22) Date of filing: 07.06.2018
(51) Int. Cl.: D06P 5/30, B41J 3/407, B33Y 80/00, B29C 64/112, B29L 5/00, B29L 31/00

(54) **A METHOD OF PRODUCING A PRINT PRODUCT HAVING A FASTENER**
VERFAHREN ZUR HERSTELLUNG EINES DRUCKPRODUKTS MIT EINEM BEFESTIGUNGSELEMENT
PROCÉDÉ DE PRODUCTION D'UN PRODUIT D'IMPRESSION PRÉSENTANT UN ÉLÉMENT DE FIXATION

(30) Priority: 15.06.2017 EP 17176160
(43) Date of publication of application: 19.12.2018
(73) Proprietor: Canon Production Printing Holding B.V., 5914 CA Venlo (NL)
(72) Inventor: DEL AGUILA, Arlette, 5914 CA Venlo (NL); ORTIZ SEGOVIA, Maria V., 5914 CA Venlo (NL); LEYNADIER, Christophe Antoine, 5914 CA Venlo (NL)
(74) Representative: Canon Production Printing IP Department

(56) References cited:
- US-A1- 2012 304 449
- US-A1- 2012 308 332
- US-A1- 2013 033 540

## Description

The invention relates to a method of producing a print product comprising:
- a print substrate bearing a printed image; and
- a fastener applied to said print substrate.

More particularly, the invention relates to techniques of processing flexible media, such as textile products, on which a decorative design has been printed and which may be used as garments or for decorative purposes, for example. In that case, the print substrate will be textile pieces which are attached to one another or to other objects by means of the one or more fasteners.

Conventional techniques for assembling pieces of printed textile comprise sewing, thermo-gluing, ultrasonic welding of thermoplastic fibers, riveting and the like. In all these cases, the step of applying a fastener to the textile piece is a separate step in the production workflow, requiring costly dedicated machinery and manual operations.

US patent application US 2012308332 describes a three-dimensional printing machine to emit material from an ink jet printing head to build up a fastener having a spiral formation.
US patent application US 2013033540 describes a printer which is configured to print an image and a polymeric adhesive layer on a print substrate.

It is an object of the invention to provide a more efficient method of applying a fastener to a print substrate.

In order to achieve this object, the method according to the invention is characterized by a step of using a jetting-type printer for printing both said printed image and the fastener onto the print substrate.

Thus, no dedicated equipment is required for forming and applying the fastener. Instead, the same jetting type printer, e.g. an ink jet printer, may be used for forming the printed image on the print substrate and for forming the fastener on the same print substrate. Consequently, the printed image and the fastener can be formed most efficiently in a single print operation.

More specific optional features of the invention are indicated in the dependent claims.

In one embodiment, the jetting-type printer used in the method according to the invention is a printer that is suitable not only for 2D printing (as a conventional ink jet printer) but also for relief or 3D printing techniques, in which ink or another curable substance is jetted onto the substrate in several layers so as to build-up an elevated three-dimensional structure which will constitute the fastener.

The fastener may for example take the form of a press button, a spike piercing a textile piece to be attached to the substrate, a zipper, a velcro-strip, or the like. In some cases, the fastener will be one of two complementary parts such as the male part and the female part of a press button. In that case, at least one of the two complementary parts of the fastener is printed on the print substrate and the complementary part of the fastener may be printed onto another object which may be a print substrate or not.

Preferably, the same ink or inks that are used for forming the decorative image on the print substrate are also used for forming the relief or 3D structure of the fastener. For example, UV-curing inks may be used for that purpose.

In another embodiment, the jetting-type printer may comprise a dedicated print head for forming the fastener. For example, the print head may be arranged to jet-out a liquid adhesive so as to print a fastener in the form of an adhesive strip onto the print substrate.

Embodiment examples will now be described in conjunction with the drawings, wherein:
- Fig. 1: is a schematic cross-sectional view of a textile product obtained by a method according to the invention;
- Fig. 2: shows a textile piece that is part of the product shown in Fig. 1;
- Fig. 3: illustrates a step of forming another textile piece that is also part of the product shown in Fig. 1;
- Fig. 4: illustrates a step of assembling the textile pieces shown in Figs. 2 and 3;
- Fig. 5: is a plan view of the textile product shown in Fig. 1;
- Figs. 6 and 7: illustrate steps of a modified method according to the invention for assembling textile pieces;
- Fig. 8: is a diagram illustrating a workflow of a method according to the invention;
- Figs. 9 and 10: illustrate another example of a textile product obtained by a method according to the invention;
- Fig. 11: is a sectional view taken along the line XI-XI in Fig. 9;
- Figs. 12 and 13: illustrate a process of assembling two textile parts by means of another method according to the invention;
- Fig. 14: is a plan view of a framed picture obtained by a method according to the invention; and
- Fig. 15: is an exploded sectional view taken along the line XV-XV in Fig. 14.

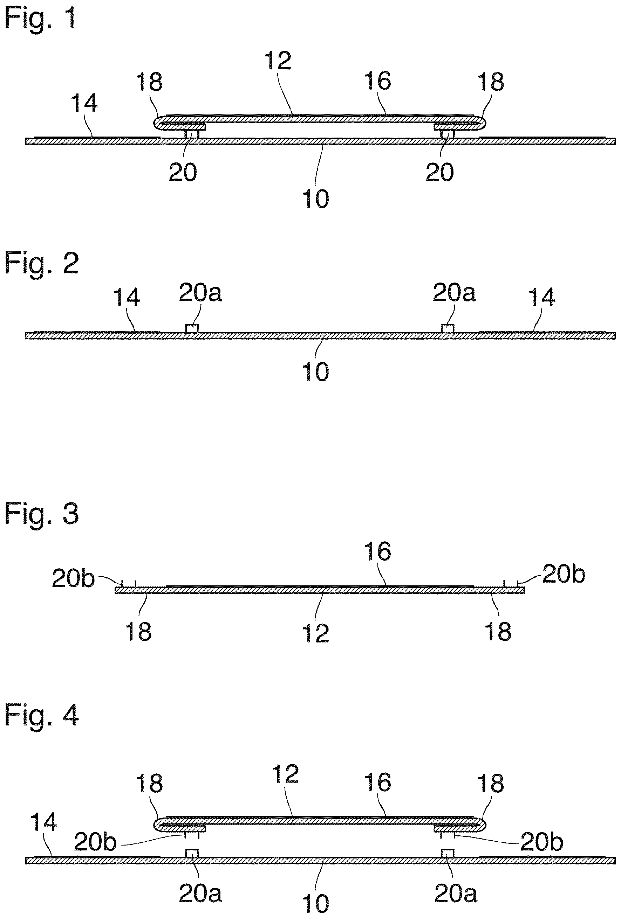

In Fig. 1, two textile pieces 10, 12 which may for example form part of a garment, have been shown in cross-section. Each of the pieces 10, 12 bears a decorative printed image 14, 16, respectively, which has been formed on the textile by means of an ink jet printer.

The piece 12 covers a part of the piece 10 and has opposite edges 18 that are folded over towards the side of the piece 10 and are attached to the piece 10 by means of fasteners 20, so that the piece 12 may for example form a pocket on the piece 10. In this example, the fasteners 20 are formed by press buttons each having a male part press fitted into a complementary female part.

The piece 10 has been shown separately in Fig. 2 and bears male parts 20a of the fasteners 20.

The piece 12 has been shown separately in Fig. 3 in a state before the edges 18 have been folded over. These edges bear female parts 20b of the fasteners 20.

For simplicity, the term "fastener" shall be used in this application not only for the entire two-component fasteners 20 but also for their individual parts 20a and 20b, because these parts 20a, 20b also have the function to fasten the corresponding pieces 10 and 12, respectively, to some other object.

The parts or fasteners 20a, 20b are three-dimensional objects that are formed by the same type of ink, e.g. a UV-curable ink, that has also been used for forming the printed images 14, 16. Thus, in the state of the piece 10 shown in Fig. 2, the printed image 14 and the fasteners 20a can be formed in a single print operation by means of a print head assembly that scans the surface of the piece 10. Similarly, in the state of the piece 12 shown in Fig. 3, the printed image 16 and the fasteners 20b can be formed in a single print operation by scanning the (top) surface of the piece 12. Then, as is shown in Fig. 4, the edges 18 are folded over, so that the female fasteners 20b face their male counterparts 20a and may be snap-fastened thereto.

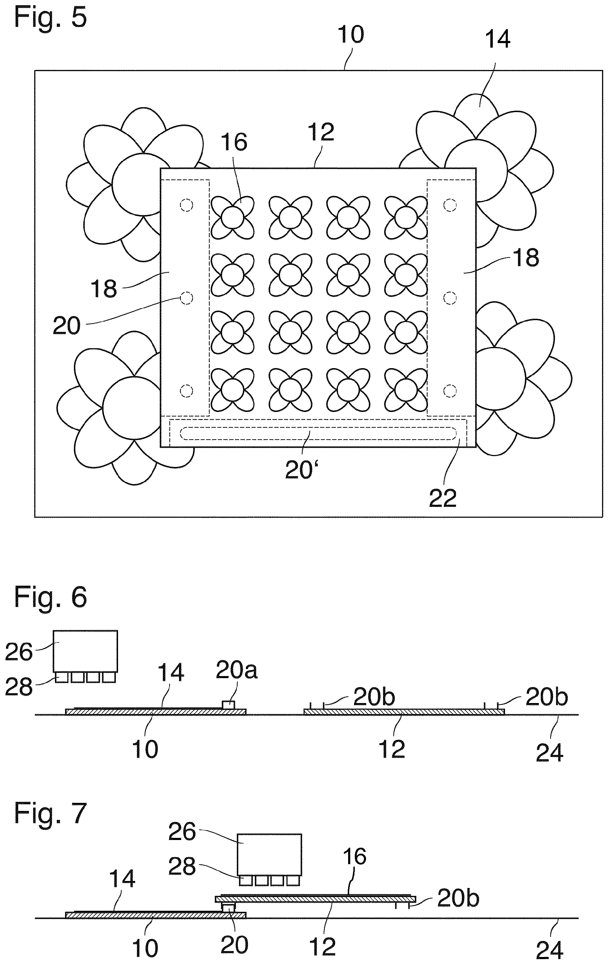

Fig. 5 shows, in a plan view, the piece 10 having the decorative image 14 (large flowers) and the piece 12 forming the pocket and having the decorative image 16 (small flowers). The folded-over edges 18 and the inter-engaged fasteners 20 have been shown in phantom lines.

As is further shown in Fig. 5, a bottom edge 22 of the piece 12 has also been folded over and bears a male or female part of a ledge-like fastener 20' which is in snap-engagement with a complementary part on the piece 10. The parts of the fastener 20' can be formed in the same print operations as the parts of the fasteners 20.

Figs. 6 and 7 illustrate an embodiment in which the textile pieces 10 and 12 are assembled in a configuration in which their edges overlap but are not folded over. As is shown in Fig. 6, the pieces 10 and 12 are placed side-by-side on a print surface 24, and a print head carriage 26 having print heads 28 scans the print surface in order to form the decorative image 14 on the piece 10, the male fastener parts 20a on the piece 10, and the female fastener parts 20b on the piece 12. Then, as is shown in Fig. 7, the piece 12 is flipped over so that its edge overlaps with an edge of the piece 10 and the fastener parts 20a and 20b on the overlapping edges are facing each other and are snap-fastened together, thereby constituting the fastener 20. Then, the print head carriage 26 scans the print surface 24 once again in order to form the decorative image 16 on the subsequent top surface of the piece 12, i.e. the surface opposite to the surface on which the fastener parts 20b have been formed. If the piece 12 has a flexibility that, in combination with the combined height of the fastened fastener parts 20a and 20b causes the top surface of piece 12 to not be substantially flat to ensure sufficient print quality of the decorative image 16, one or more temporary supports may be placed between the pieces 10 and 12 to maintain the top surface of piece 12 substantially flat during forming of the decorative image 16. Optionally, another textile piece may be placed on the print surface 24, and in the print operation shown in Fig. 7, fastener parts 20a may be formed on this further textile piece, so that the latter can be attached to the free edge of the piece 12. In this way, a textile product in the form of a patchwork may be formed with high efficiency.

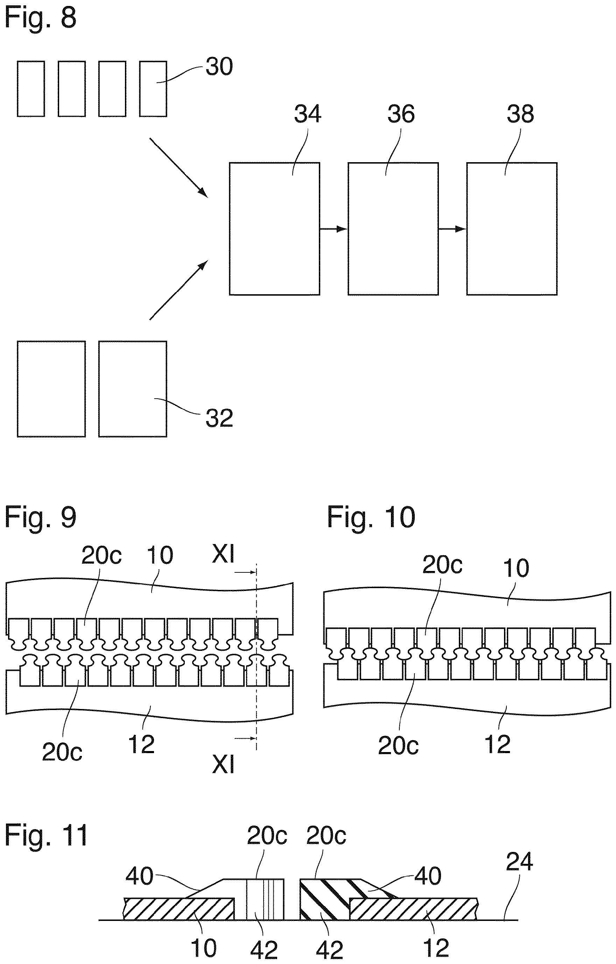

Fig. 8 illustrates a possible workflow for the processes that have been described above.

Fastener print files 30 and image print files 32 are loaded into a processor 34 on which an editing software has been implemented. The fastener print files 30 specify the shapes and other relevant properties (e.g. the type of ink to the used) of various types of fasteners including the fastener parts 20a and 20b as described above. These fastener print files may for example be imported from a suitable library.

The image print files 32 specify the decorative images to be printed on the print substrates, e.g. the textile pieces 10, 12. Optionally, the print files may also specify the shapes of the print substrates.

The processor 34 has a user interface permitting a user to merge and edit the fastener print files 30 and the image print files 32 so as to specify the positions of the decorative images 14, 16 on the print substrates as well as the positions and the types of the fasteners on these print substrates as well as other properties such as the color of the fasteners. Alternatively, specifying the positions may be automated or partly automated, for example by having a user only designating two corresponding edges of two respective pieces to be joint and the processor 34 automatically determining one or more of fastener type, number, and position. The edited and compiled print data are then transmitted to a jetting-type (ink jet) printer 36 where the decorative images and fasteners are applied to the print substrates. Finally, the print substrates bearing the decorative images and the fasteners are physically transferred to an assembly station 38 where the pieces are assembled together by means of their fasteners.

In a more elaborated embodiment (not shown), a cutting station and a robot system may be added in the vicinity of the printer 36. Then, the print substrates (pieces 10, 12) may be cut from suitable blanks in the shapes as specified by the image print files 32, and the robot system may be used for placing the cut print substrates on the print surface of the printer 36 in specified positions, so that the print head carriage 26 may be controlled to print the images and the fasteners in the required positions. Optionally, in case of the method shown in Figs 6 and 7, the robot system may also be used for flipping the print substrates (pieces 12) after the fasteners or fastener parts have been formed thereon.

Optionally, the robot system may even be used for unloading the print products (pieces 10, 12 bearing decorative images and fasteners) from the print surface and assembling them together in the assembly station 38.

Figs. 9 to 11 illustrate an embodiment where a row of tooth-like fasteners 20c is formed along an edge of each of the pieces 10 and 12. The fasteners 20c are shaped such that they can inter-engage to form a zipper, as shown in Fig. 10.

As can be seen in the cross-sectional view in Fig. 11, the fasteners 20c have a base portion 40 printed on the top surface of the respective piece 10, 12 and assuring that the fastener 20c as a whole is firmly attached to the textile piece. On the other hand, each fastener 20c has a projecting portion 42 which projects beyond the edge of the textile piece and has a larger thickness so that its bottom surface is flush with the bottom surface of the pieces 10, 12, i.e. the surfaces opposite to the surfaces which carry the decorative images 12, 14. When the fasteners 20c are printed in the configuration shown in Fig. 11, it is preferred that the print surface 24 is made of a material or coated with a material that limits the adhesion of the ink forming the projecting portions 42 of the fasteners at the print surface. Thus, the projecting portions 42 can be printed directly on the print surface but can easily be removed together with their respective textile pieces 10, 12, because the fasteners 20c will adhere more strongly to the textile pieces than to the print surface.

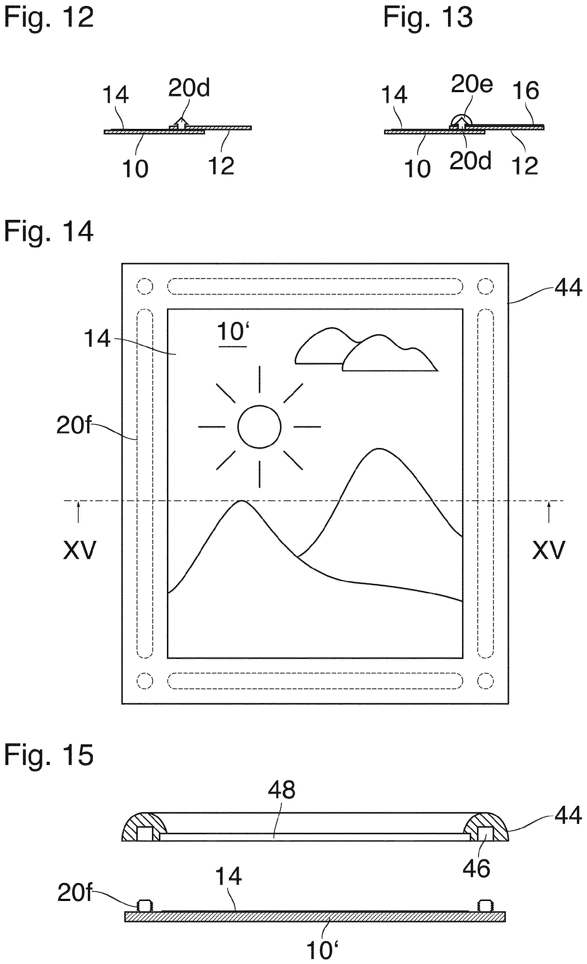

Fig. 12 shows an embodiment where a fastener 20d printed on the top (image-carrying) surface of the piece 10 takes the form of a spike that can pierce an overlapping edge portion of the piece 12, thereby to attach the piece 12 to the piece 10. In the example shown, the fastener 20d is arrow-shaped and therefore has an undercut delimiting a stem portion carrying the arrow-head which has a larger diameter. As is well known in the art of 3D printing, it is possible to produce such undercuts in ink jet printing, e.g. by using fast-curing inks or by using support structures which fill the undercut during the print process and are washed away later.

As is shown in Fig. 13, the print product obtained in Fig. 12 may be subjected to another printing step in which the decorative image 16 is formed on the top surface of the piece 12 and, simultaneously, a cover 20e is printed over the acute tip of the spike-shaped fastener 20d. This has not only the effect to prevent injuries from the acute tip of the fasteners 20d but has also the effect that the piece 12 is secured more firmly at the fastener 20d and at the piece 10. In this sense, the cover 20e can also be considered as a kind of fastener.

Fig. 14 shows, as another example of a print product obtained by the method according to the invention a framed picture comprising a print substrate 10', e.g. a canvas, cardboard or, preferably, a rigid plate, bearing a printed decorative image 14 and surrounded by a frame 44 which may for example be made of molded plastics. Fasteners 20f are printed on an edge portion of the print substrate 10'. These fasteners serve for attaching the print substrate 10' to the frame 44 by force-fitting engagement into corresponding recesses 46 (Fig. 15) in the back side of the frame 44.

Fig. 15 shows the frame 44 having the above-mentioned recesses 46. Further, the inner peripheral edge of the frame 44 forms a recess for accommodating a glass plate 48.

As is also shown in Fig. 15, the print substrate 10' takes the form of a rigid plate on which the image 14 and the fasteners 20f have been printed. In this embodiment, the fasteners 20f take the form of harpoon prongs which fit into the recesses 46, thereby attaching the print substrate 10' to the frame 44 and also holding the glass plate 48 in its recess.

## Claims

1. A method of producing a print product, the product comprising:
- a print substrate (10, 12; 10') bearing a printed image (14, 16); and
- a fastener (20; 20'; 20a - 20f) applied to said print substrate (10, 12; 10'), the method comprising a step of using a jetting-type printer (36) for printing both
said printed image (14, 16) and the fastener (20; 20'; 20a - 20f) onto said print substrate (10, 12; 10'),
**characterized in that** the fastener (20; 20'; 20a - 20f) is a three-dimensional printed object.

2. The method according to claim 1, wherein the fastener (20; 20'; 20a - 20f) is formed of an ink that is also used for printing at least a part of said printed image (14, 16).

3. The method according to claim 2, wherein said ink is UV-curing ink.

4. The method according to any of the preceding claims, wherein the print substrate (10, 12) is a piece of flexible media such as textile.

5. The method according to any of the preceding claims, comprising printing fasteners (20a, 20b; 20c; 20d, 20e) which are capable of being inter-engaged with one another, on two different print substrates (10, 12).

6. A printing system comprising a jetting-type printer (36) capable of printing three-dimensional objects onto a print substrate (10, 12; 10'), a means for applying a fastener and a means for printing a printed image, the system further comprising a processor (34) arranged to control the printer (36), **characterized in that** the processor (34) is configured to perform the method according to any of the claims 1 to 5.

7. A computer program product comprising program code on a non-transitory computer-readable medium, the program code, when run on a processor (34) of a printing system according to claim 6, causing the processor to perform the method according to any of the claims 1 to 5.

## Patentansprüche

1. Verfahren zur Herstellung eines Druckerzeugnisses, das folgendes aufweist:
- ein Drucksubstrat (10, 12; 10'), das ein gedrucktes Bild (14, 16) trägt; und
- ein Befestigungselement (20; 20'; 20a-20f), das an dem Drucksubstrat (10, 12; 10') angebracht ist,
welches Verfahren einen Schritt aufweist, bei dem ein Strahldrucker (36) dazu benutzt wird, sowohl das gedruckte Bild (14, 16) als auch das Befestigungselement (20; 20'; 20a-20f) auf das Drucksubstrat (10, 12; 10') zu drucken,
**dadurch gekennzeichnet, dass** das Befestigungselement (20; 20'; 20a-20f) ein dreidimensionales gedrucktes Objekt ist.

2. Verfahren nach Anspruch 1, bei dem das Befestigungselement (20; 20', 20a-20f) aus einer Tinte gebildet wird, die auch zum Drucken wenigstens eines Teils des gedruckten Bildes (14, 16) verwendet wird.

3. Verfahren nach Anspruch 2, bei dem die Tinte eine UV-härtende Tinte ist.

4. Verfahren nach einem der vorstehenden Ansprüche, bei dem das Drucksubstrat (10, 12) ein Stück eines flexiblen Medienmaterials, wie etwa ein Textilmaterial ist.

5. Verfahren nach einem der vorstehenden Ansprüche, bei dem Befestigungselemente (20a, 20b; 20c; 20d, 20f) die in der Lage sind, miteinander in Eingriff gebracht zu werden, auf zwei verschiedene Drucksubstrate (10, 12) gedruckt werden.

6. Drucksystem mit einem Strahldrucker (36), der in der Lage ist, dreidimensionale Objekte auf ein Drucksubstrat (10, 12; 10') zu drucken, einer Einreichung zum Anbringen eines Befestigungselements, und einer Einrichtung zum Drucken eines gedruckten Bildes, welches System weiterhin einen Prozessor (34) aufweist, der dazu ausgebildet ist, den Drucker (36) zu steuern, **dadurch gekennzeichnet, dass** der Prozessor (34) dazu konfiguriert ist, das Verfahren nach einem der Ansprüche 1 bis 5 auszuführen.

7. Computerprogrammprodukt mit Programmcode auf einem nichtflüchtigen computerlesbaren Medium, welcher Programmcode, wenn er auf einem Prozessor (34) eines Drucksystems nach Anspruch 6 läuft, den Prozessor veranlasst, das Verfahren nach einem der Ansprüche 1 bis 5 auszuführen.

## Revendications

1. Procédé de production d'un produit d'impression, le produit comprenant :
- un substrat d'impression (10, 12 ; 10') portant une image imprimée (14, 16) ; et
- un élément de fixation (20; 20'; 20a - 20f) appliqué audit substrat d'impression (10, 12 ; 10'),
le procédé comprenant une étape d'utilisation d'une imprimante du type à jet (36) pour l'impression à la fois de ladite image imprimée (14, 16) et de l'élément de fixation (20 ; 20' ; 20a - 20f) sur ledit substrat d'impression (10, 12 ; 10'),
**caractérisé en ce que** l'élément de fixation (20; 20' ; 20a - 20f) est un objet imprimé tridimensionnel.

2. Procédé selon la revendication 1, dans lequel l'élément de fixation (20 ; 20' ; 20a - 20f) est formé d'une encre qui est également utilisée pour l'impression d'au moins une partie de ladite image imprimée (14, 16).

3. Procédé selon la revendication 2, dans lequel ladite encre est une encre séchant sous UV.

4. Procédé selon l'une quelconque des revendications précédentes, dans lequel le substrat d'impression (10, 12) est une pièce de support flexible telle qu'un textile.

5. Procédé selon l'une quelconque des revendications précédentes, comprenant l'impression d'éléments de fixation (20a, 20b ; 20c; 20d, 20e) qui sont aptes à être engagés les uns avec les autres, sur deux substrats d'impression (10, 12) différents.

6. Système d'impression comprenant une imprimante du type à jet (36) apte à imprimer des objets tridimensionnels sur un substrat d'impression (10, 12; 10'), un moyen destiné à appliquer un élément de fixation et un moyen destiné à imprimer une image imprimée, le système comprenant en outre un processeur (34) agencé pour commander l'imprimante (36), **caractérisé en ce que** le processeur (34) est configuré pour mettre en œuvre le procédé selon l'une quelconque des revendications 1 à 5.

7. Produit-programme d'ordinateur comprenant un code de programme sur un support lisible par ordinateur non transitoire, le code de programme, lorsqu'il est exécuté sur un processeur (34) d'un système d'impression selon la revendication 6, amenant le processeur à mettre en œuvre le procédé selon l'une quelconque des revendications 1 à 5.
